# EUROPÄISCHE PATENTANMELDUNG

(11) **EP 0 968 858 A1**
(43) Veröffentlichungstag der Anmeldung: **05.01.2000**
(21) Anmeldenummer: 99111823.3
(22) Anmeldetag: 19.06.1999
(51) Int. Cl.: B60H 1/00

(54) **Luftzuführungseinrichtung und Verfahren zur Regelung der Luftzuführung in einem Fahrzeug**

(30) Priorität: 02.07.1998 DE 19829567
(71) Anmelder: Mannesmann VDO Aktiengesellschaft, 60388 Frankfurt am Main (DE)
(72) Erfinder: Strobel, Henry, 65843 Sulzbach (DE)
(74) Vertreter: Klein, Thomas, Dipl.-Ing.

(57) **Zusammenfassung**

In Fahrzeugen ist zur Belüftung des Innenraums eine Luftzuführungseinrichtung mit einem Luftkanal (1), Lufteinström- (2) und Luftausströmöffnungen (10) sowie einem Gebläse (4) zur Förderung der Luft vorhanden. Die Drehzahl des Gebläses (4) kann vom Fahrer mittels eines Bedienelements im Fahrgastraum stufenlos oder in Stufen eingestellt werden. Vor allem bei nicht vollständig oder sogar nur gering geöffneten bzw. einzelnen ganz geschlossenen Luftausströmöffnungen (10) treten, abhängig von der Fahrgeschwindigkeit, Zustände ein, bei denen zur ausreichenden Belüftung des Fahrzeuginneren ganz oder teilweise auf die Mithilfe des Gebläses (4) verzichtet werden kann, wodurch eine Energieeinsparung erreicht werden kann. Erfindungsgemäß wird deshalb vorgeschlagen die Luftzuführungseinrichtung so auszugestalten, daß Mittel zur Regelung der Drehzahl des Gebläses (4) in Abhängigkeit von dem im Luftkanal erzeugten Druck vorhanden sind. Die Drehzahl des Gebläsemotors wird dann in Abhängigkeit vom Luftdruck im Luftkanal geregelt, so daß bei hoher Fahrgeschwindigkeit und/oder teilweise oder ganz geschlossenen Luftausströmöffnungen die Drehzahl des Gebläses und damit dessen Energieaufnahme reduziert werden kann. Im Luftkanal ist hierzu ein Drucksensor 5 angeordnet, dessen Signal einem Steuer- und Regelgerät zugeleitet wird.

## Beschreibung

Die Erfindung betrifft eine Einrichtung zur Luftzuführung in den Innenraum eines Fahrzeuges mit einem Luftkanal mit mindestens einer Lufteinström- und Luftausströmöffnung sowie zwischen der Lufteinström- und Luftausströmöffnung angeordnetem Gebläsemotor zur Förderung der Luft von der Lufteinström- zur Luftausströmöffnung sowie ein Verfahren zur Regelung der Drehzahl eines Gebläsemotors einer Luftzuführungseinrichtung eines Fahrzeuges.

Zur Belüftung des Innenraums besitzen Kraftfahrzeuge eine Luftzuführung, bei der Außenluft über eine Lufteinstromöffnung mittels eines Luftkanals zu Luftausströmöffnungen im Fahrzeuginnenraum gefördert wird. Bei hohen Geschwindigkeiten kann bereits ohne zusätzliche Hilfsmittel eine ausreichende Luftmenge in den Innenraum befördert werden. In der Regel ist jedoch für den Transport einer ausreichenden Luftmenge der Betrieb eines Gebläses erforderlich. Um den Komfortansprüchen der Fahrzeuginsassen gerecht zu werden und die beispielsweise aufgrund unterschiedlicher Witterungsbedingungen erforderlichen Luftmengen bereitstellen zu können, kann die Drehzahl des Gebläsemotors vom Fahrer in Stufen oder auch stufenlos eingestellt werden. Die zugeführte Luft kann in der Regel durch im Luftkanal vorhandene Wärmetauscher erwärmt und bei Fahrzeugen mit Klimaanlage auch abgekühlt werden. Zur schnellen Erwärmung oder - bei Fahrzeugen mit Klimaanlage - Abkühlung des Fahrzeuginneren sowie bei vereisten oder beschlagenen Scheiben wird eine große Luftmenge durch eine hohe Drehzahl des Gebläsemotors in den Innenraum befördert. Unter normalen Fahrbedingungen und bei bereits nach den Wünschen der Insassen temperiertem Innenraum wird dagegen eine kleinere Drehzahl des Gebläsemotors ausreichen, um die benötigte Luftmenge in den Innenraum zu transportieren. Für die normale Belüftung wird daher eine niedrigere Drehzahl des Gebläsemotors eingestellt, die in der Regel während der Fahrt vom Fahrer nur selten geändert wird.

Wie eingangs bereits angedeutet wird die geförderte Luftmenge neben der Drehzahl des Gebläsemotors aber auch von der Fahrgeschwindigkeit beeinflußt. Auch die Fahrzeuginsassen beeinflussen durch den Öffnungsgrad der Luftausströmöffnungen die Menge der in den Innenraum beförderten Luft. Vor allem bei nicht vollständig oder sogar nur gering geöffneten bzw. einzelnen ganz geschlossenen Luftausströmöffnungen treten, abhängig von der Fahrgeschwindigkeit, Zustände ein, bei denen zur ausreichenden Belüftung des Fahrzeuginneren ganz oder teilweise auf die Mithilfe des Gebläses verzichtet werden kann, wodurch eine Energieeinsparung erreicht werden kann. Hier setzt die vorliegende Erfindung nun an, deren Aufgabe es ist, eine Einrichtung zur Luftzuführung in den Innenraum eines Fahrzeuges vorzuschlagen , mit der gegenüber herkömmlichen Einrichtungen eine Energieeinsparung bei gleichzeitigem Komfortgewinn für die Fahrzeuginsassen angestrebt wird.

Erfindungsgemäß wird die Aufgabe dadurch gelöst, daß Mittel zur Regelung der Drehzahl des Gebläses in Abhängigkeit von dem im Luftkanal erzeugten Druck bei einer gattungsgemäßen Einrichtung zur Luftzuführung in den Innenraum eines Fahrzeuges vorhanden sind. Die Drehzahl des Gebläse wird nach dem erfindungsgemäßen Verfahren in Abhängigkeit vom Luftdruck in der Luftzuführungseinrichtung geregelt.

Durch die erfindungsgemäßen Maßnahmen wird erreicht, daß der Luftdruck im Bereich des Lüftungskanals zwischen dem Gebläse und den Luftaustrittsöffnungen weitgehend konstant bleibt und zwar unabhängig vom Öffnungsgrad der Lufteinström- und Luftausströmöffnungen oder der Fahrgeschwindigkeit. Werden beispielsweise einzelne Luftausströmöffnungen ganz oder teilweise geschlossen so wird bei sonst identischen Bedingungen die Gebläsedrehzahl reduziert werden können, um den vorgegebenen Druck im Luftkanal aufrecht zu erhalten. Dies bewirkt durch den nunmehr verringerten Energieverbrauch des Gebläsemotors eine Energieeinsparung. Gleichzeitig kann aber auch eine Verbesserung im Lüftungskomfort erreicht werden. Ohne die erfindungsgemäßen Maßnahmen führt das ganz oder teilweise Schließen einzelner Luftausströmöffnungen bei unveränderter Drehzahl des Gebläsemotors zu einer Erhöhung des Drucks im Luftkanal. Als Folge dieser Druckerhöhung können insbesondere bei kleinem Öffnungsgrad der Luftausströmöffnungen Strömungsgeräusche auftreten, die von den Fahrzeuginsassen als störend empfunden werden. Durch die erfindungsgemäße Konstanthaltung des Luftdruckes im Luftkanal werden diese Strömungsgeräusche vermieden.

Im Luftkanal ist mindestens ein Drucksensor vorgesehen, mit dem der Luftdruck im Luftkanal bestimmt wird. Das Meßsignal des Drucksensors wird einer Regeleinrichtung zugeführt, die die Drehzahl des Gebläsemotors so regelt, daß ein konstanter Druck im Luftkanal erzeugt wird. Vom Fahrer des Fahrzeuges kann analog zu der bisherigen Steuerung der Drehzahl des Gebläsemotors nunmehr vom Fahrgastraum aus der Vorgabewert für den Luftdruck im Luftkanal vorgegeben werden.

Im Luftkanal können auch mehrere Drucksensoren vorhanden sein, deren Meßsignale der Drehzahlregelung zugeführt werden. Dies ist insbesondere bei Fahrzeugen mit mehreren Luftausströmöffnungen von Bedeutung, da bei diesen abhängig vom Öffnungsgrad der Luftausstromöffnungen lokale Druckunterschiede auftreten können. Die Drucksensoren können dann insbesondere auch in den einzelnen Teilluftzuführungen zu den verschiedenen Luftausströmöffnungen angebracht werden. Hierdurch entsteht der weitere Vorteil, daß aus dem Meßwert für den (Über-)Druck in jedem Teilluftkanal und dem Öffnungswinkel jeder Luftausströmöffnung, der über einen (Positions-)Sensor erfaßt werden kann, die über die Luftausströmöffnungen in das Fahrzeuginnere strömende Luftmenge besonders genau erfaßt und für weitere Regelzwecke ausgewertet werden kann.

Als Drucksensoren können sowohl Absolut- als auch Differenzdrucksensoren eingesetzt werden, wobei letztere bevorzugt werden.

Im folgenden wird die Erfindung anhand der Figuren und eines Ausführungsbeispiels näher erläutert. Es zeigen:
- Fig. 1: die schematische Darstellung einer erfindungsgemäßen Einrichtung,
- Fig. 2: die schematische Darstellung einer Regelschleife zur Durchführung des erfindungsgemäßen Verfahrens,
- Fig. 3: eine Luftzuführungseinrichtung eines Fahrzeuges mit mehreren Lufteinström- und Luftausströmöffnungen.

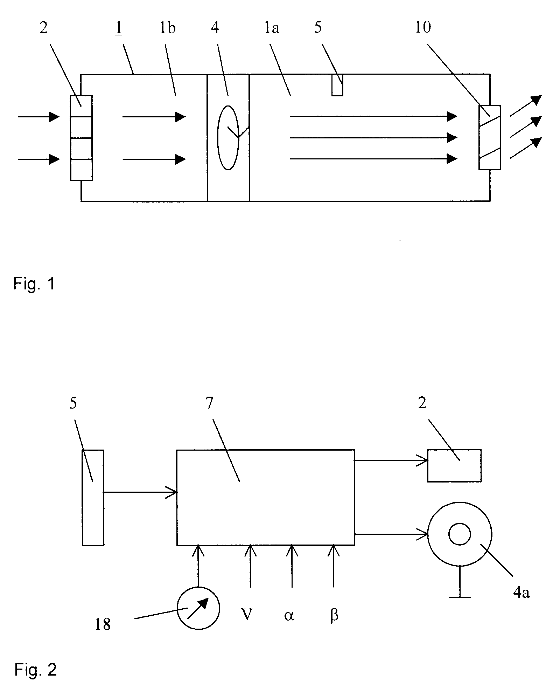

In Fig. 1 ist eine erfindungsgemäße Einrichtung schematisch dargestellt. Der Luftkanal 1, der die Luft in den Innenraum des Fahrzeugs leitet, weist ein Lufteinströmöffnung 2 und eine Luftausströmöffnung 10 auf. Durch ein Gebläse 4 wird die eintretende Luft verdichtet, so daß im Bereich zwischen Gebläse 4 und Luftausströmöffnung 10 ein Überdruck entsteht. Die komprimierte Luft wird durch die Luftausströmöffnung 10 in den Innenraum des Fahrzeuges geleitet. Erfindungsgemäß ist in der Luftzuführung ein Drucksensor 5 im Luftkanalbereich 1a zwischen dem Gebläse 4 und der Luftausströmöffnung 10 vorgesehen. Der Drucksensor 5 mißt den Überdruck im Luftkanal. In Abhängigkeit vom Meßwert des Drucksensors wird die Drehzahl des Gebläses 4 geregelt. Der Luftdruck im Luftkanalbereich 1b zwischen Lufteinströmöffnung 2 und Gebläse 4 ist auch von der Fahrtgeschwindigkeit abhängig, so daß bei ausreichend hoher Fahrtgeschwindigkeit der Gebläsemotor ganz abgeschaltet werden kann und eine Konstanthaltung des Drucks im Luftkanalbereich 1a gemäß einer besonderen Ausführungsform durch automatisches, teilweises Schließen der Lufteinströmöffnung 2 erreicht werden kann.

Zur Durchführung des erfindungsgemäßen Verfahrens wird, wie in Fig. 2 dargestellt, das Meßsignal des Drucksensors 5 einem Steuer- und Regelgerät 7 zugeführt. Neben dem Signal des Drucksensors 5 wird dem Steuergerät auch ein vom Fahrer im Innenraum mittels eines Bedienelements 8 eingestellter Vorgabewert für die Luftzuführung in den Innenraum zugeführt. Das Bedienelement entspricht dem bisherigen Schalter für die Gebläsedrehzahl, mit dem Unterschied, daß nunmehr anstelle einer konstanten Gebläsedrehzahl der Wert für den Überdruck im Luftkanalbereich 1a eingestellt wird. In Abhängigkeit vom Meßwert des Drucksensors 5 wird nun vom Steuer- und Regelgerät 7 die Drehzahl des Gebläsemotors 4a so gewählt, daß der Druck im Luftkanalbereich 1a dem vom Fahrer gewählten Vorgabewert entspricht. Hierzu kann beispielsweise die Spannung am Gebläsemotor 4a durch das Steuer- und Regelgerät 7 variiert werden. Ist der vom Drucksensor 5 gemessene Druck höher als es dem vom Fahrer mittels Bedienelement 8 gewählten Wert entspricht, so wird die Spannung am Gebläsemotor und damit dessen Drehzahl verringert. Wird bei hoher Fahrgeschwindigkeit der gewünschte Druck im Luftkanalbereich 1a auch ohne Gebläse erreicht, so kann dieses ganz abgeschaltet werden. Steigt bei bereits ausgeschaltetem Gebläsemotor der Druck im Luftkanalbereich 1a beispielsweise aufgrund sehr hoher Fahrgeschwindigkeit und/oder nur gering geöffneter Luftausströmöffnungen weiter an, so kann gemäß einer gesonderen Ausführungsform durch das Steuer- und Regelgerät 7 die Lufteinströmöffnung 2 teilweise geschlossen werden. Hierzu erhält ein Stellmotor zur Betätigung einer nicht eingezeichneten Klappe in der Lufteinströmöffnung 2 entsprechende Signale vom Steuer- und Regelgerät 7. Somit kann unter allen Betriebsbedingungen ein konstanter Druck im Luftkanalbereich 1a aufrecht erhalten werden.

Weisen die Luftausströmöffnungen 10 Sensoren zur Bestimmung des Öffnungsgrades der Schließklappen auf, so können auch diese Informationen (eingezeichnet in Fig. 2 sind Eingangskanäle für zwei Öffnungswinkel α und β) dem Steuergerät 7 zugeführt werden. Über die Eingangsgrößen Überdruck im Luftkanalbereich 1a und Öffnungswinkel der Luftausströmöffnungen kann im Steuergerät zudem die in den Innenraum einströmende Luftmenge bestimmt werden.

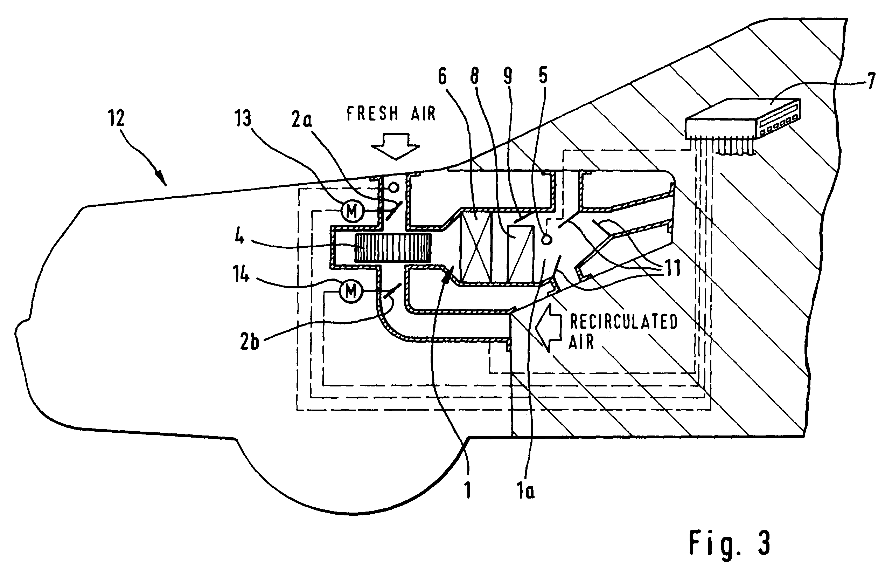

In Figur 3 ist eine Luftzuführungseinrichtung in konkreter Form einer Klimaanlage im Kraftfahrzeug 12 dargestellt. Die Klimaanlage weist zwei Lufteinströmöffnungen auf, nämlich eine Frischluftzuführung mit Frischluftklappe 2a und eine Umluftzuführung mit Umluftklappe 2b. Das Verhältnis zwischen Frischluft und Umluft wird über die Stellung dieser Klappen 2a, 2b bestimmt, die über Motoren 13, 14 eingestellt werden. Die einströmende Luft wird durch das Gebläse 4 verdichtet, durchströmt einen ersten Wärmetauscher 6 zur Kühlung und Trockung der Luft und gegebenenfalls, abhängig von der Stellung der Temperaturklappe 9, einen zweiten Wärmetauscher 8 zur Erwärmung der Luft auf die gewünschte Temperatur. Die Luft wird im dargestellten Ausführungsbeispiel durch den Luftkanal zu drei Ausströmöffnungen 10 geleitet, die den Luftstrom in den Fußraum, den Oberkörperbereich und in Richtung Scheiben führen. In den Teilluftkanälen zu den Ausströmöffnungen 10 sind Klappen 11 vorhanden, mittels derer die Ausströmöffnungen nach den Bedürfnissen der Fahrzeuginsassen ganz oder teilweise geschlossen werden können. Im Luftkanalbereich 1a zwischen dem Gebläse 4 und den Ausströmöffnungen 10, im Ausführungsbeispiel speziell zwischen dem zweiten Wärmetauscher 8 und den Ausströmöffnungen 10, ist ein Differenzdrucksensor 5 eingebaut über den der Überdruck in diesem Luftkanalbereich gemessen wird. Das Meßsignal wird dem Steuer- und Regelgerät 7 zugeführt. Aus dem Vergleich des gemessenen Überdrucks mit einem vom Fahrer mittels eines Bedienelements im Fahrgastraum eingestellten Vorgabewertes ergibt sich die Regelgröße für den Gebläsemotor, d.h. die Spannung am Gebläsemotor und damit die Drehzahl des Gebläses kann durch das Steuer- und Regelgerät 7 erhöht oder erniedrigt werden, um den Druck im Luftkanal dem Vorgabewert anzupassen. Bei bereits abgeschaltetem Gebläsemotor erfolgt die Druckregelung über das Öffnen und Schließen der Klappen 2a und/oder 2b in den Lufteinströmöffnungen. Hierzu werden vom Steuer- und Regelgerät 7 entsprechende Steuerbefehle an die Motoren 13 bzw. 14 geschickt.

Wie das Ausführungsbeispiel verdeutlicht hat kann mit der erfindungsgemäßen Luftzuführungseinrichtung eine Energieeinsparung erreicht werden, da der Gebläsemotor stets nur mit der im jeweiligen Betriebszustand erforderlichen Drehzahl betrieben wird. Gegebenfalls wird er sogar durch das Steuer- und Regelgerät ganz abgeschaltet. Darüberhinaus wird durch einen konstanten Überdruck im Luftkanal aber auch das störende Auftreten von Geräuschen bei ganz oder teilweise geschlossenen Luftaustrittsöffnungen vermindert.

## Patentansprüche

1. Einrichtung zur Luftzuführung in den Innenraum eines Fahrzeuges mit einem Luftkanal (1) mit mindestens einer Lufteinström-(2) und Luftausströmöffnung (10) sowie zwischen der Lufteinström- (2) und Luftausströmöffnung (10) angeordnetem Gebläse (4) zur Förderung der Luft von der Lufteinström-(2) zur Luftausströmöffnung (10), gekennzeichnet durch Mittel zur Regelung der Drehzahl des Gebläses (4) in Abhängigkeit von dem im Luftkanal erzeugten Druck.

2. Einrichtung zur Luftzuführung in den Innenraum eines Fahrzeuges nach Anspruch 1, dadurch gekennzeichnet, daß zwischen dem Gebläse (4) und der Luftaustrittsöffnung (10) mindestens ein Drucksensor (5) angeordnet ist, dessen Signal einem Steuer- und Regelgerät (7) zugeführt wird.

3. Einrichtung zur Luftzuführung in den Innenraum eines Fahrzeuges nach Anspruch 1 oder 2, dadurch gekennzeichnet, daß mehrere Drucksensoren (5) vorhanden sind.

4. Einrichtung zur Luftzuführung in den Innenraum eines Fahrzeuges nach einem der vorhergehenden Ansprüche, dadurch gekennzeichnet, daß mehrere Luftaustrittsöffnungen (10) vorhanden sind und im Luftkanal zu jeder Luftaustrittsöffnung ein Drucksensor (5) vorhanden ist.

5. Einrichtung zur Luftzuführung in den Innenraum eines Fahrzeuges nach einem der vorhergehenden Ansprüche, dadurch gekennzeichnet, daß es sich bei den Drucksensoren (5) um Differenzdrucksensoren handelt.

6. Einrichtung zur Luftzuführung in den Innenraum eines Fahrzeuges nach einem der vorhergehenden Ansprüche, dadurch gekennzeichnet, daß Mittel zur Bestimmung des Öffnungsgrades der Luftausströmöffnung(en) (10) vorhanden sind.

7. Einrichtung zur Luftzuführung in den Innenraum eines Fahrzeuges nach einem der vorhergehenden Ansprüche, dadurch gekennzeichnet, daß Mittel zur Veränderung des Öffnungsgrades der Lufteintrittsöffnung(en) (2) vorhanden sind.

8. Verfahren zur Regelung der Drehzahl eines Gebläsemotors (4a) einer Luftzuführungseinrichtung eines Fahrzeuges, die einen Luftkanal (1) mit mindestens einer Lufteinström-(2) und Luftausströmöffnung (10), ein regelbares Gebläse (4) sowie Mittel zur Regelung der Drehzahl des Gebläse aufweist, dadurch gekennzeichnet, daß die Drehzahl des Gebläse in Abhängigkeit vom Luftdruck im Luftkanal geregelt wird.

9. Verfahren nach Anspruch 7, dadurch gekennzeichnet, daß der Luftdruck in der Luftzuführungseinrichtung zusätzlich durch Verändern des Öffnungsgrades der Lufteintrittsöffnung(en) (2) geregelt wird.
